# EUROPÄISCHE PATENTANMELDUNG

(11) **EP 4 312 349 A1**
(43) Veröffentlichungstag der Anmeldung: **31.01.2024**
(21) Anmeldenummer: 23185921.6
(22) Anmeldetag: 17.07.2023
(51) Int. Cl.: H02K 1/32, H02K 17/16

(54) **ELEKTRISCHE MASCHINE**

(30) Priorität: 26.07.2022 DE 102022207625
(71) Anmelder: Volkswagen Aktiengesellschaft, 38440 Wolfsburg (DE)
(72) Erfinder: Pieper, Sven, 33178 Borchen (DE); Bachmann, Tim, 34308 Bad Emstal (DE); Grützner, Stefan, 34281 Gudensberg (DE); Ledderbogen, Daniel, 38518 Gifhorn (DE); Woicke, Tobias, 38458 Velpke (DE); Ila, Dennis, 38448 Wolfsburg (DE); Stolle, Marius, 38102 Braunschweig (DE)

(57) **Zusammenfassung**

Vorgeschlagen wird eine elektrische Maschine (10) umfassend ein Blechpaket (14) mit Kühlkanälen (14b) und mindestens einer Decklamelle (20). Die Decklamelle (20) weist erste Öffnungen (20a) zum Leiten von Kühlmittel (30) in Kühlkanale (14b) des Blechpakets (14) der elektrischen Maschine (10) und zweite Öffnungen (20b) zum Leiten von Kühlmittel (30) aus Kühlkanälen (14b) des Blechpakets (14) auf, wobei sich die ersten Öffnungen (20a) und die zweiten Öffnungen (20b) hinsichtlich ihrer radialen Position unterscheiden.

## Beschreibung

Die vorliegende Erfindung betrifft eine elektrische Maschine nach Anspruch 1.

Elektrische Maschinen umfassend Decklamellen sind aus dem Stand der Technik grundsätzlich bekannt.

Die DE 10 2011 117 517 A1 schlägt zur Schaffung eines möglichst robusten und gleichmäßig gekühlten Rotors einer elektrischen Maschine eine Vorrichtung zur Durchströmung des Rotors mit einem Kühlmittel vor, bei der vorgesehen ist, dass in beiden Pressplatten Kühlelementleitungen angeordnet sind, die von der Rotorwelle in Richtung der Leiterstäbe verlaufen, und bei der die vorgenannten Kühlmittelleitungen in beiden Pressplatten entweder mit einer gemeinsamen Kühlmittelleitung verbunden sind, die in der Rotorwelle angeordnet ist, oder die vorgenannten Kühlmittelleitungen in der einen Pressplatte mit einer ersten Kühlmittelleitung verbunden sind, die in der Rotorwelle angeordnet ist, wobei die Kühlmittelleitungen in der anderen Pressplatte mit einer zweiten Kühlmittelleitung verbunden sind, die in der Rotorwelle angeordnet ist, wobei ein Kühlmittel über die Kühlmittelleitungen dem Rotor zugeführt wird und über weitere Kühlmittelleitungen von dem Rotor abgeführt wird.

Die DE 10 2019 217 510 A1 betrifft einen Rotor für eine Elektromaschine, aufweisend eine Rotorlängsachse, einen sich entlang der Rotorlängsachse erstreckenden Rotorgrundkörper, mindestens eine in axialer Richtung neben einer ersten Grundkörperseite des Rotorgrundkörpers angeordnete erste Wuchtscheibe, wobei in dem Rotorgrundkörper eine Kühlmittelkavität zum Leiten von Kühlmittel entlang der Rotorlängsachse ausgebildet ist, wobei die Kühlmittelkavität einen Kühlmitteleinlass zum Einleiten des Kühlmittels in die Kühlmittelkavität und einen Kühlmittelauslass zum Ableiten des Kühlmittels aus der Kühlmittelkavität aufweist. Gemäß dem besonderen Vorteil dieser Ausführungsform weist die erste Wuchtscheibe auf einer dem Rotorgrundkörper abgewandten Seite eine Kühlmittelaufnahme zur Aufnahme des Kühlmittels auf, wobei die erste Wuchtscheibe eine erste Wuchtscheibenkavität zum Durchleiten des Kühlmittels von der Kühlmittelaufnahme zum Rotorgrundkörper aufweist, wobei ein erstes Einlassende der ersten Wuchtscheibenkavität fluidkommunizierend mit der Kühlmittelaufnahme gekoppelt ist, und wobei ein erstes Auslassende der ersten Wuchtscheibenkavität fluidkommunizierend mit dem Kühlmitteleinlass der Kühlmittelkavität gekoppelt ist. Der Kühlmitteleinlass weist dabei vorzugsweise einen geringeren Abstand zur Rotorlängsachse als der Kühlmittelauslass auf, und der Kühlmitteleinlass und/oder der Kühlmittelauslass sind in eine Richtung parallel zur Rotorlängsachse geöffnet beziehungsweise ausgerichtet. Über den Kühlmitteleinlass ist Kühlmittel in die Kühlmittelaktivität einbringbar und über den Kühlmittelauslass aus der Kühlmittelkavität herausführbar.

Mit der DE 10 2019 206 008 A1 wird ein Rotor einer elektrischen Maschine vorgeschlagen, aufweisend eine Rotationsachse, ein sich um die Rotationsachse erstreckendes Lamellenpaket mit mehreren Kühlkanälen, die sich bezüglich der Rotationsachse axial durch das Lamellenpaket durchgängig erstrecken und in Umfangsrichtung des Rotors zueinander beabstandet sind. Der Rotor weist jeweils einen an jeder der Stirnseiten des Lamellenpakets angebrachten Aufsatz auf, wobei an den Aufsätzen ein Einlassbereich und ein Auslassbereich für jeden Kühlkanal ausgebildet ist, wobei der Auslassbereich eines der Aufsätze sich gegenüber dem Querschnitt des jeweiligen Kühlkanals jeweils in vom Lamellenpaket abgewandter axialer Richtung nach radial außen hin erweitert, der Einlassbereich entweder als gradlinige Fortsetzung des Kühlkanals ausgebildet ist oder sich gegenüber dem Kühlkanal des jeweiligen Kühlkanals jeweils in vom Lamellenpaket abgewandter axialer Richtung nach radial innen erweitert und die Aufsätze jeweils von einem Abdeckelement abgedeckt sind. Das Abdeckelement weist eine Einlassöffnung zum Einströmen in den Einlassbereich und eine Auslassöffnung zum Ausströmen aus dem Auslassbereich auf, wobei die einem der Kühlkanäle zugeordnete Auslassöffnung jeweils radial weiter außerhalb angeordnet ist als die demselben Kühlkanal zugeordnete Einlassöffnung.

Die WO 2020/023 363 A1 betrifft eine elektrische Maschine mit einem Rotor, der eine sich in axialer Richtung erstreckende Welle und einen die Welle umgebenden Rotorkörper aufweist, und einem den Rotor umgebenden Stator, wobei ein Kühlmittelkanalsystem mit einer ersten Kanalstruktur vorgesehen ist, mittels derer Kühlmittel von einer sich durch die Welle in axialer Richtung erstreckenden Wellenbohrung in eine Mehrzahl von Rotorausnehmungen überführbar ist.

Hiervon ausgehend ist es Aufgabe der Erfindung, bei einem Rotor die Verteilung von Kühlmittel in das Blechpaket bzw. aus dem Blechpaket hinaus zu optimieren, während ferner der Montagaufwand reduziert wird.

Gelöst wird die oben genannte Aufgabe durch eine elektrische Maschine umfassend ein Blechpaket mit Kühlkanälen und mindestens eine Decklamelle, wobei die Decklamelle erste Öffnungen zum Leiten von Kühlmittel in Kühlkanäle des Blechpakets der elektrischen Maschine und zweite Öffnungen zum Leiten von Kühlmittel aus Kühlkanälen des Blechpakets aufweist. Dabei unterscheiden sich die Öffnungen hinsichtlich ihrer radialen Position.

Die Decklamelle ist insbesondere als Scheibe geformt. Vor allem handelt es sich um eine Deckscheibe. Durch die unterschiedliche Anordnung von ersten Öffnungen und zweiten Öffnungen kommen diesen unterschiedliche Funktionen zu. Bei den ersten Öffnungen handelt es sich insbesondere um Zuführöffnungen, d.h. Kühlmittel fließt durch eine erste Öffnung in einen Kühlkanal des Blechpakets, während es sich bei den zweiten Öffnungen um Abführöffnungen, d.h. Kühlmittel fließt durch eine zweite Öffnung aus einem Kühlkanal des Blechpakets, handelt. Bei dem Kühlmittel handelt es sich insbesondere um Öl.

Insbesondere sind die zweiten Öffnungen radial weiter außen angeordnet als die ersten Öffnungen. Vor allem können die ersten und/die zweiten Öffnungen eine Form aufweisen, bspw. eine Kreisform oder eine Form eines Halbkreises. Es können die ersten Öffnungen und die zweiten Öffnungen die gleiche Form aufweisen. Vor allem handelt es sich bei den Öffnungen um Durchgangsöffnungen, vor allem Bohrungen.

Es wird eine optimale Verteilung von Kühlmittel erreicht. Dies reduziert die entstehenden Temperaturen im Rotor durch die entsprechende Wärmeentwicklung durch Verlustleistung, was unter anderem die erwartete Lebensdauer des Motors erhöht. Als Material für die mindestens eine Decklamelle wird kein Kupfer, sondern vorzugsweise ein weichmagnetischer Werkstoff, bspw. Elektroblechmaterial, eingesetzt.

Die Decklamelle kann weitere, vor allem schlitzförmige, Öffnungen aufweisen, die allerdings radial weiter außen angeordnet sind und nicht zum Hineinleiten oder Hinausleiten vom Kühlmittel in das Blechpaket oder aus dem Blechpaket hinaus dienen.

Es kann den Öffnungen vor allem ein Mittelpunkt und/oder ein Flächenschwerpunkt zugeordnet sein. Vor allem liegen die jeweiligen Mittelpunkte und/oder Flächenschwerpunkte der zweiten Öffnungen radial weiter außen als die jeweiligen Mittelpunkte und/oder Flächenschwerpunkte der ersten Öffnungen. Bei einer kreisförmigen Form fallen Mittelpunkt und Flächenschwerpunkt zusammen.

Vorzugsweise liegen die Mittelpunkte und/oder Flächenschwerpunkte aller ersten Öffnungen und aller zweiten Öffnungen in radialer Richtung zwischen einem inneren und einem äußeren radialen Abstand der Kühlkanäle des Blechpaketes. Die Kühlkanäle im Blechpaket erstrecken sich in axialer Richtung, und zwar in radialer Richtung ausgehend von einem inneren Abstand bis zu einem äußeren Abstand. Die Differenz zwischen innerem und äußerem Abstand entspricht somit dem Durchmesser der Kühlkanäle. Insbesondere sind alle Kühlkanäle auf derselben radialen Höhe angeordnet, in anderen Worten weisen sie den gleichen inneren Abstand und äußeren Abstand auf. Der radiale Abstand bezieht sich auf eine Mittellinie des Blechpakets und/oder einer Welle der elektrischen Maschine.

In radialer Richtung können die Mittelpunkte und/oder Flächenschwerpunkte der zweiten Öffnungen in der radial äußeren Hälfte, vorzugsweise im radial äußerem Drittel, der Kühlkanäle angeordnet sein. Die Mittelpunkte und/oder Flächenschwerpunkte der ersten Öffnungen können in radialer Richtung in der radial inneren Hälfte, vorzugsweise im radial inneren Drittel, der Kühlkanäle angeordnet sein. In anderen Worten lässt sich die Strecke zwischen radial innerem Abstand und radial äußerem Abstand der Kühlkanäle in zwei Hälften bzw. drei Drittel teilen, wobei die radiale Position, wie zuvor beschrieben, in der entsprechenden Hälfte oder Drittel liegt.

Vorzugsweise wechseln sich erste Öffnungen und zweite Öffnungen in Umfangsrichtung ab. In radialer Richtung weist die Decklamelle an keiner Stelle eine erste und eine zweite Öffnung auf.

Die ersten Öffnungen und/oder die zweiten Öffnungen können als Halbkreise ausgebildet sein. Sie weisen somit jeweils die Form eines Halbkreises auf. Jeder Halbkreis zeichnet sich durch einen Kreisbogen und eine Gerade aus, wobei die Mittelpunkte auf der Gerade liegen. Die Halbkreise der ersten und zweiten Öffnungen weisen einen Mittelpunkt auf, wobei die Mittelpunkte der ersten Öffnungen und die Mittelpunkte der zweiten Öffnungen den gleichen radialen Abstand zu einer Mittellinie der Decklamelle aufweisen können. Die Mittelpunkte aller Öffnungen können sich somit auf einem gedachten Kreis in Umfangsrichtung auf gleicher radialer Höhe befinden.

Insbesondere erstrecken sich die Kreisbögen der ersten Öffnungen radial nach innen, während sich die Kreisbögen der zweiten Öffnungen insbesondere radial nach außen erstrecken. Während somit die Form übereinstimmt, ist die Anordnung unterschiedlich und dient dazu, die unterschiedliche Funktion der Öffnungen zu bewirken.

Vor allem ist die mindestens eine Decklamelle an einer Stirnseite des Blechpakets angeordnet. Vor allem ist jedem Kühlkanal eine erste Öffnung oder eine zweite Öffnung zugeordnet. Vor allem ist jedem Kühlkanal an einer Stirnseite des Blechpakets eine erste Öffnung und an der anderen Stirnseite eine zweite Öffnung zugeordnet.

Insbesondere weist das Blechpaket an beiden Stirnseiten mindestens eine Decklamelle auf. Ferner kann das Blechpaket an einer Stirnseite mehrere Decklamellen aufweisen, die gestapelt angeordnet sind. Im Detail liegt eine Decklamelle an der Stirnseite des Blechpakets an, während weitere Decklamellen in gestapelter Form axial nach außen folgen. Die Decklamellen können identisch ausgebildet sein.

Die Decklamellen können derart angeordnet sein, dass sich die ersten Öffnungen und/oder die zweiten Öffnungen jeweils zumindest teilweise überlappen. Insbesondere überlappen sich die ersten Öffnungen gänzlich und/oder die zweiten Öffnungen gänzlich. Somit werden jeweils gradlinige, axiale, in den gestapelten Decklamellen verlaufende Kanäle zum Einleiten von Kühlmittel in das Blechpaket und/oder zum Ausleiten von Kühlmittel aus dem Blechpaket geschaffen.

Ferner können sich ersten Öffnungen unterschiedlicher gestapelter Decklamellen nur teilweise überlappen. Gleiches kann für die zweiten Öffnungen gelten. Somit kann ein Kanal zum Ausleiten und/oder Einleiten von Kühlmittel in das Blechpaket oder aus dem Blechpaket hinaus geschaffen werden, der nicht gradlinig in axialer Richtung verläuft, sondern sich beispielsweise verzweigt. Vorzugsweise kann somit mindestens ein Kanal, insbesondere alle in den gestapelten Decklamellen gebildeten Kanäle, in einem Winkel zur gradlinigen axialen Richtung stehen. Ferner kann eine mäanderförmige Kanalstruktur ausgebildet sein. Die Führung des Kühlmediums kann somit durch die Stapelung mehrerer Decklamellen gezielt beeinflusst werden.

Die Decklamellen des Blechpakets können jeweils einen vom Blechpaket abweichenden Außendurchmesser aufweisen, wobei der Außendurchmesser der Decklamelle höchstens 75 % des Außendurchmessers des Blechpakets betragen kann. Ferner bevorzugt beträgt der Außendurchmesser der Decklamelle höchstens 50 %, am meisten bevorzugt höchstens 30 %, des Außendurchmessers des Blechpakets.

Eine Decklamelle kann vor allem eine Dicke zwischen 0,1 mm und 4mm, vorzugsweise zwischen 0,2 mm und 0,5 mm, am meisten bevorzugt zwischen 0,3 mm und 0,4 mm, aufweisen.

Der Vorteil der Ausführung der Decklamelle mit einem radial verringerten Durchmesser liegt darin, dass die mindestens eine Decklamelle an der Stirnseite des Blechpakets nachträglich angeordnet werden kann. Die Decklamelle kann somit im Nachhinein auf einen inneren Bereich des Blechpakets angeordnet werden, nachdem dieses in den Kurzschlussring, der dieses ummantelt, eingebracht wurde.

Die elektrische Maschine kann ferner mindestens ein Umlenkelement zum Umleiten von Kühlmittel aus der Welle in Richtung Blechpaket und/oder zum Umleiten von Kühlmittel aus dem Blechpaket in Richtung Kurzschlussring und/oder Wickelkopf der elektrischen Maschine umfassen. Das mindestens eine Umlenkelement zum Umleiten ist insbesondere rotationssymmetrisch geformt. Das Umlenkelement kann insbesondere als abgesetzter Ring geformt sein. Die Welle kann derart hohl gebildet sein, dass sie einen axialen Kanal zum Leiten von Kühlmittel umfasst. Ferner weist sie radiale Wellenbohrungen auf, aus denen Kühlmittel austritt und in mindestens einen Kühlkanal im Blechpaket umgeleitet werden muss.

Alternativ zu einer rotationssymmetrischen Ausbildung kann das Umlenkelement Stege aufweisen. Dadurch werden mehrere Umlenkbereiche geformt. Bspw. kann einer Wellenbohrung mittels des Umlenkbereichs genau einem Kühlkanal zugeordnet sein, sodass Kühlmittel einer Wellenbohrung nicht in mehrere Kühlkanäle aufgeteilt werden kann.

Der Innenradius des Umlenkelementes kann sich von einem axialen Ende, das an der Stirnseite des Blechpakets angeordnet ist, kontinuierlich oder stufenförmig verringern. De Außenradius kann über die gesamte Breite konstant sein Insbesondere kann der Innenradius des Umlenkelements derart gewählt werden, dass das Umlenkelement in einem ersten äußeren axialen Bereich an der Welle anliegt, während in einem zweiten radialen inneren, der Decklamelle zugewandten Bereich der Innenradius größer gebildet ist, sodass ein Umlenkbereich zum Umleiten von Kühlmittel aus den Wellenbohrungen in der Welle in Kühlkanäle im Blechpaket geformt ist. Ferner ist das Umlenkelement derart angeordnet, dass die Wellenbohrungen in den Umlenkbereich münden.

Die Mittelpunkte und/oder Flächenschwerpunkte der ersten Öffnungen liegen vorzugsweise radial weiter innen als der Außenradius des Umlenkelementes, wobei die Mittelpunkte und/oder Flächenschwerpunkte der zweiten Öffnungen radial weiter außen liegen als der Außenradius des Umlenkelements. Es ergeben sich zwei Wege für Kühlmittel, je nachdem, ob einem Ende eines Kühlkanals eine erste Öffnung oder eine zweite Öffnung zugeordnet ist. Liegt eine erste Öffnung vor, kann Kühlmittel aus der Wellenbohrung in den Umlenkbereich und von dort durch die erste Öffnung in den Kühlkanal fließen. Liegt eine zweite Öffnung vor, kann Kühlmittel in axialer und radialer äußerer Richtung abfließen. Zum Umleiten von Kühlmittel aus dem Blechpaket in Richtung Kurzschlussring und/oder Wickelkopf dient somit nicht der innere Umlenkbereich, sondern die Stirnfläche und/oder eine Außenfläche des Umlenkelements. Die Decklamelle versperrt einen Weg, während sie durch die entsprechende Öffnung den anderen Weg freigibt.

Insbesondere ist der Innenradius des Umlenkelements am axial inneren Ende größer als der radial innere Abstand der Kühlkanäle im Blechpaket, jedoch kleiner als der radial äußere Abstand der Kühlkanäle.

Vor allem weist die elektrische Maschine zwei Umlenkelemente auf, die an den beiden Decklamellen an den Stirnseiten des Blechpakets angeordnet sind. Das mindestens eine Umlenkelement ist insbesondere als zusätzliches Bauteil zur Welle und/oder zum Blechpaket gebildet. Ferner kann das Umlenkelement einstückig mit der Welle, vorzugsweise als Wellenanschlag, ausgebildet sein. Das Umlenkelement kann somit als radial nach außenstehender Steg der Welle ausgebildet sein. Es kann einseitig ein Umlenkelement als Teil der Welle ausgebildet sein, sodass bei der Montage der elektrischen Maschine das Blechpaket und der Kurzschlussring auf die Welle aufgebracht werden können, wobei auf der anderen Seite ein Umlenkelement als separates Bauteil eingesetzt werden kann.

Dadurch, dass das Umlenkelement rotationssymmetrisch gebildet ist, ist eine besonders einfache Herstellung möglich, und der Montageaufwand wird wesentlich reduziert. Der Umlenkbereich ist in Umfangsrichtung durchgängig gebildet. Insbesondere unterscheidet das Umlenkelement in dessen Geometrie nicht zwischen ersten Öffnungen und zweiten Öffnungen, denen es gegenübertritt.

Bei der vorliegenden Erfindung wird vor allem der Montageaufwand wesentlich reduziert, da die Montage einer Decklamelle reicht, um die optimale Zuführung von Kühlmittel zu den Kühlkanälen im Blechpaket und die Auskopplung beispielsweise in Richtung Kurzschlussring und/oder Wickelkopf zu ermöglichen. Eine Unterscheidung zwischen Einlass, das heißt Zuführung von Kühlmittel aus der Welle ins Blechpaket, oder Auslass, das heißt Abfuhr aus dem Blechpaket beispielsweise auf den Kurzschlussring oder den Wickelkopf, entsteht nicht durch das Umlenkelement, sondern ausschließlich durch die Position beziehungsweise teilweise unterschiedliche Anordnung der ersten Öffnung und der zweiten Öffnung in der mindestens einen Decklamelle.

Es zeigen in rein schematischer Darstellung:
- Figur 1: eine Schnittdarstellung einer erfindungsgemäßen elektrischen Maschine;
- Figur 2: eine Detaildarstellung des im Kasten angeordneten Ausschnitts der Figur 1;
- Figur 3: eine Aufsicht eines Abschnitts der Decklamelle der Figuren 1 und 2;
- Figur 4: eine perspektivische Darstellung der Figur 1; und
- Figur 5:: eine weitere Schnittdarstellung nach Figur 1.

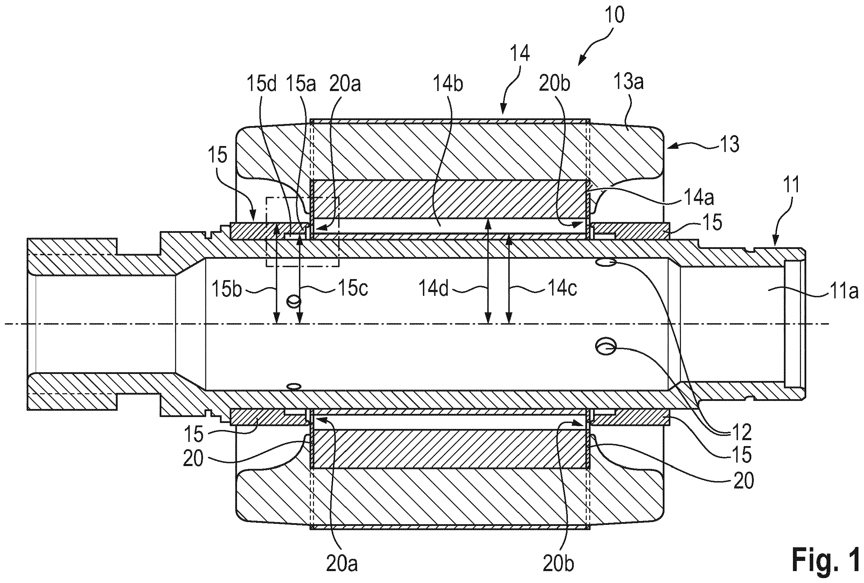

In Figur 1 ist eine elektrische Maschine 10 zu sehen, die eine Welle 11 umfasst. Zentral in der Welle 11 ist ein Kühlkanal 11a angeordnet. Kühlmittel 30 kann aus dem Kühlkanal 11a durch radiale Wellenbohrungen 12 austreten. Ferner umfasst die elektrische Maschine 10 einen Kurzschlussring 13, wobei in Figur 1 zwei Käfigstäbe 13a dargestellt sind. Ferner umfasst die elektrische Maschine 10 ein Blechpaket 14, das auf die Welle 11 aufgebracht ist und vom Kurzschlussring 13 radial ummantelt wird.

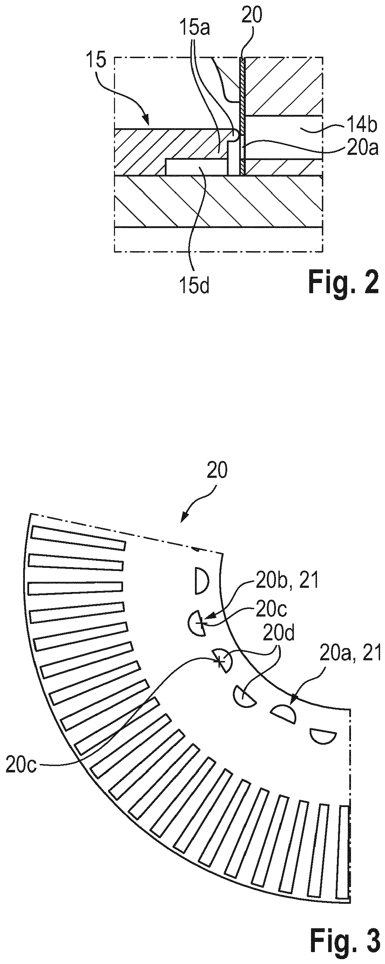

An beiden Stirnseiten des Blechpakets 14 ist eine Decklamelle 20 angeordnet. Das Blechpaket 14 weist Kühlkanäle 14b auf, von denen in Figur 2 zwei dargestellt sind, einer oberhalb der Welle 11 und einer unterhalb der Welle 11. Die Kühlkanäle 14b weisen jeweils einen inneren radialen Abstand 14c sowie einen äußeren radialen Abstand 14d auf, zwischen denen sich die Kühlkanäle 14b in axialer Richtung erstrecken.

In axial äußerer Richtung schließt sich an jede Decklamelle 20 jeweils ein Umlenkelement 15 an. Dies dient dazu, Kühlmittel 30 aus den Kühlkanälen 14b des Blechpakets 14 nach radial und axial außen zu entlassen beziehungsweise Kühlmittel 30 aus radialen Wellenbohrungen 12 in die Kühlkanäle 14b im Blechpaket 14 zu leiten. Den beiden in Figur 1 dargestellten Kühlkanälen ist bezüglich der linken Decklamelle jeweils eine erste Öffnung 20a zugeordnet, während an dem anderen axialen Ende (rechts) den Kanälen jeweils eine zweite Öffnung 20b der dort angeordneten Decklamelle 20 zugeordnet ist.

In Figur 2 ist der eingekastelte Bereich der Figur 1 detaillierter dargestellt. Es ist der Bereich gezeigt, in dem die Decklamelle 20 an der Stirnseite 14a des Blechpakets 14 und das Umlenkelement 15 an der Decklamelle 20 angeordnet sind. Das Umlenkelement 15 weist einen Außenradius 15b und einen Innenradius 15c auf. Auf der Innenseite des Umlenkelemente 15 sind zwei Stufen 15a ausgebildet. Der Innenradius 15c verändert sich somit ausgehend vom axial inneren Ende des Umlenkelements 15 hin zum axialen äußeren Ende, wobei in einem axialen Endbereich der Innenradius derart ausgebildet ist, dass das Umlenkelement 15 mit dessen Innenwand mit der Außenwand der Welle 11 abschließt. Es wird somit ein umfänglicher Umlenkbereich 15d gebildet, in den die Wellenbohrungen 12 münden.

Der Außenradius 15b des Umlenkelements ist insbesondere über dessen gesamte axiale Breite konstant. Der Außenradius 15b ist größer als der innere radiale Abstand 14c und kleiner als der äußere radiale Abstand 14d der Kühlkanäle 14b.

Ferner weist die Decklamelle 20 erste Öffnungen 20a und zweite Öffnungen 20b auf. Jedem Kühlkanal 14b in Figur 1 ist auf einer Stirnseite eine erste Öffnung 20a und auf der anderen Stirnseite eine zweite Öffnung 20b zugeordnet. Es ist dem Kühlkanal, der in Figur 2 dargestellt ist, eine erste Öffnung 20a zugeordnet, sodass die Abfuhr nach radial außen gesperrt ist. Es wird Kühlmittel 30 aus mindestens einer radialen Wellenbohrung 12 durch den Umlenkbereich 15d in den Kühlkanal 14b geleitet.

Figur 3 zeigt einen Abschnitt einer Decklamelle 20 der Figur 1 in Draufsicht, wobei die Decklamelle 20 entlang deren gesamten Umfang entsprechend ausgebildet ist. Zu sehen ist, wie erste Öffnungen 20a und zweite Öffnungen 20b ausgebildet sind, die sich in Umfangsrichtung abwechseln. Alle Öffnungen sind als Halbkreise 21 ausgebildet. Die Flächenschwerpunkte 20d der zweiten Öffnungen 20b sind radial weiter außen angeordnet als die Flächenschwerpunkte 20d der ersten Öffnungen 20a. Die Mittelpunkte 20c der ersten Öffnungen 20a und die der zweiten Öffnungen 20b liegen auf einem gleichen gedachten Kreis mit konstantem radialen Radius. In anderen Worten erstrecken sich nur die Kreisbögen der Halbkreise entweder nach radial außen oder radial innen.

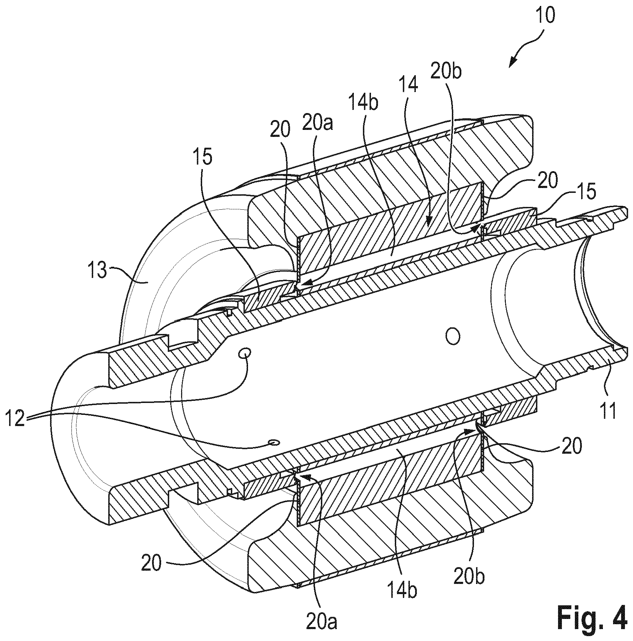

Figur 4 zeigt eine perspektivische Ansicht, wobei deutlich zu sehen ist, wie die den beiden dargestellten Kühlkanälen Öffnungen zugeordnet sind. Dem oberen Kühlkanal 14b ist in Figur 4 links eine erste und rechts eine zweite Öffnung zugewiesen. Dem unteren Kühlkanal 14b ist in Figur 4 links ebenfalls eine erste und rechts eine zweite Öffnung zugeordnet.

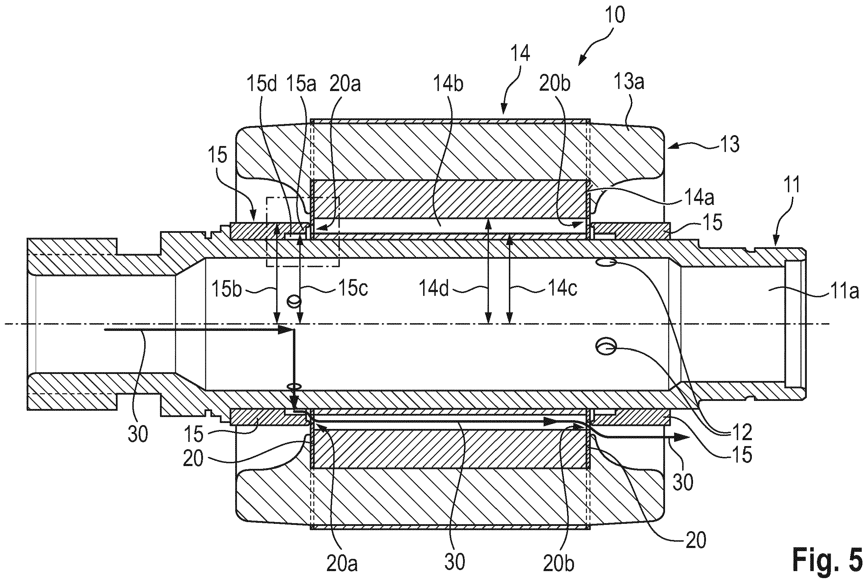

Figur 5 zeigt die gleiche Ansicht wie Figur 1, wobei allerdings die Führung des Kühlmittels 30 dargestellt ist. Auf der linken Seite ist dem dargestellten Kühlkanal 14b eine erste Öffnung 20a der entsprechenden Decklamelle 20 zugeordnet, während an dem anderen axialen Ende eine zweite Öffnung 20b der dort angeordneten Decklamelle 20 zugeordnet ist. Dies führt dazu, dass Kühlmittel 30 durch die Wellenbohrung 20 mit Hilfe des Umlenkelements 15 in den Kühlkanal 14b geleitet wird, während an der rechten Seite die zweite Öffnung 20b dazu führt, dass Kühlmittel, nachdem es den Kühlkanal 14b durchflossen hat, nach radial außen beispielsweise in Richtung Kurzschlussring und/oder Wickelkopf geleitet wird.

### Bezugszeichenliste

- 10: elektrische Maschine
- 11: Welle
- 11a: Kühlkanal in Welle
- 12: Wellenbohrung
- 13: Kurzschlussring
- 13a: Käfigstab
- 14: Blechpaket
- 14a: Stirnseite
- 14b: Kühlkanal in Blechpaket
- 14c: innere radialer Abstand
- 14d: äußerer radialer Abstand
- 15: Umlenkelement
- 15a: Stufe
- 15b: Außenradius
- 15c: Innenradius
- 15d: Umlenkbereich

- 20: Decklamelle
- 20a: erste Öffnung
- 20b: zweite Öffnung
- 20c: Mittelpunkt
- 20d: Flächenschwerpunkt
- 21: Halbkreis

- 30: Kühlmittel

## Patentansprüche

1. Elektrische Maschine (10) umfassend ein Blechpaket (14) mit Kühlkanälen (14b) und mindestens einer Decklamelle (20),
**dadurch gekennzeichnet, dass**
die Decklamelle (20) erste Öffnungen (20a) zum Leiten von Kühlmittel (30) in Kühlkanale (14b) des Blechpakets (14) der elektrischen Maschine (10) und zweite Öffnungen (20b) zum Leiten von Kühlmittel (30) aus Kühlkanälen (14b) des Blechpakets (14) aufweist,
wobei sich die ersten Öffnungen (20a) und die zweiten Öffnungen (20b) hinsichtlich ihrer radialen Position unterscheiden.

2. Elektrische Maschine (10) nach Anspruch 1,
**dadurch gekennzeichnet, dass**
die zweiten Öffnungen (20b) radial weiter außen als die ersten Öffnungen (20a) angeordnet sind.

3. Elektrische Maschine (10) nach Anspruch 1 oder 2,
**dadurch gekennzeichnet, dass**
Mittelpunkte (20c) und/oder Flächenschwerpunkte (20d) der ersten Öffnungen (20a) und der zweiten Öffnungen (20b) in radialer Richtung zwischen einem inneren radialen Abstand (14c) und einem äußeren radialen Abstand (14d) der Kühlkanäle (14b) liegen,
wobei die jeweiligen Mittelpunkte (20c) und/oder Flächenschwerpunkte (20d) der zweiten Öffnungen (20b) radial weiter außen angeordnet sind als die jeweiligen Mittelpunkte (20c) und/oder Flächenschwerpunkte (20d) der ersten Öffnungen (20a).

4. Elektrische Maschine (10) nach Anspruch 3,
**dadurch gekennzeichnet, dass**
in radialer Richtung die Mittelpunkte (20c) und/oder die Flächenschwerpunkte (20d) der zweiten Öffnungen (20b) in der radial äußeren Hälfte der Kühlkanäle (14b) angeordnet sind,
wobei die Mittelpunkte (20c) und/oder die Flächenschwerpunkte (20d) der ersten Öffnungen (20a) in radialer Richtung in der radial inneren Hälfte der Kühlkanäle (14b) angeordnet sind.

5. Elektrische Maschine (10) nach einem der vorangehenden Ansprüche,
**dadurch gekennzeichnet, dass**
die ersten Öffnungen (20a) und/oder die zweiten Öffnungen (20b) als Halbkreise (21) ausgebildet sind.

6. Elektrische Maschine (10) nach Anspruch 5,
**dadurch gekennzeichnet, dass**
die Mittelpunkte (20c) der ersten Öffnungen (20a) und die Mittelpunkte (20c) der zweiten Öffnungen (20b) den gleichen radialen Abstand zu einer Mittellinie der Decklamelle aufweisen.

7. Elektrische Maschine (10) nach einem der vorangehenden Ansprüche,
**dadurch gekennzeichnet, dass**
die mindestens eine Decklamelle (20) an einer Stirnseite (14a) des Blechpakets (14) angeordnet ist.

8. Elektrische Maschine (10) nach Anspruch 7a,
**dadurch gekennzeichnet, dass**
an mindestens einer Stirnseite (14a) mehrere Decklamellen (20) gestapelt angeordnet sind.

9. Elektrische Maschine (10) nach einem der vorangehenden Ansprüche,
**dadurch gekennzeichnet, dass**
die Decklamelle (20) und das Blechpaket (14) jeweils einen Außendurchmesser aufweisen, wobei der Außendurchmesser der Decklamelle (20) höchstens 75 % des Außendurchmessers des Blechpaketes (14) beträgt.

10. Elektrische Maschine (10) nach einem der vorangehenden Ansprüche,
**dadurch gekennzeichnet, dass**
mindestens ein Umlenkelement (15) zum Umleiten von Kühlmittel (30) aus einer Welle (11) in Richtung Blechpaket (14) und/oder zum Umleiten von Kühlmittel (30) aus dem Blechpaket (14) in Richtung Kurzschlussring und/oder Wickelkopf der elektrischen Maschine umfasst.
